# EUROPÄISCHE PATENTANMELDUNG

(11) **EP 3 272 448 A1**
(43) Veröffentlichungstag der Anmeldung: **24.01.2018**
(21) Anmeldenummer: 17182297.6
(22) Anmeldetag: 20.07.2017
(51) Int. Cl.: B23F 5/16, B23F 21/00

(54) **VERFAHREN ZUR FERTIGUNG EINES EINSATZGEHÄRTETEN ZAHNRADES, INSBESONDERE MIT EINER INNENVERZAHNUNG**

(30) Priorität: 21.07.2016 DE 102016113512
(71) Anmelder: Profilator GmbH & Co. KG, 42329 Wuppertal (DE)
(72) Erfinder: Prock, Erich, 88213 Ravensburg (DE)
(74) Vertreter: Grundmann, Dirk

(57) **Zusammenfassung**

Die Erfindung betrifft ein Verfahren zur Fertigung eines einsatzgehärteten Zahnrades (1) mit folgenden Schritten: Bereitstellen eines mit einem Aufmaß vorverzahnten, einsatzgehärteten Zahnrades (1); Zustellen eines Schälrades (11) in eine erste Bearbeitungsstellung, Bearbeiten jeweils nur der linken Zahnflanken (3) der Zähne (2) des Zahnrades (1) mit einer Wälzschälbewegung, bei der die Spanabtragsstelle (10) vom Zahnkopf (5) zum Zahnfuß (6) wandert; Zustellen desselben Schälrades (11, 11') oder eines zweiten Schälrades (11') in eine zweite Bearbeitungsstellung, Bearbeiten jeweils nur der rechten Zahnflanken (4) der Zähne (2) des Zahnrades (1) mit einer Wälzschälbewegung, bei der die Spanabtragsstelle (10) vom Zahnkopf (5) zum Zahnfuß (6) wandert. Wesentlich ist, dass der Vorschub beim Bearbeiten der rechten Zahnflanken (4) um 180 Grad verschieden ist gegenüber dem Vorschub beim Bearbeiten der linken Zahnflanken (3), bzw. dass die Verzahnung eine Innenverzahnung ist und als Werkzeug ein Hartmetallschälrad (11, 11') verwendet wird.

## Beschreibung

### Gebiet der Technik

Die Erfindung betrifft ein Verfahren mit folgenden Schritten:
1. Bereitstellen eines mit einem Aufmaß vorverzahnten, nach dem Vorverzahnen in eine über das Aufmaß gehende Tiefe der linken und rechten Zahnflanken der Zähne einsatzgehärteten Zahnrades;
2. Zustellen eines Schälrades in eine erste Bearbeitungsstellung, wobei die Drehachse des Schälrades in einem von null verschiedenen Achskreuzwinkel zur Drehachse des Zahnrades steht, sodass Schneidkanten der in die Zahnlücken des Zahnrades eingreifenden Schneidzähne des Schälrades mit einem positivem Spanwinkel an den linken Zahnflanken der Zähne angreifen;
3. Bearbeiten jeweils nur der linken Zahnflanken der Zähne des Zahnrades mit einer Wälzschälbewegung, bei der die Spanabtragsstelle vom Zahnkopf zum Zahnfuß wandert;
4. Zustellen desselben Schälrades oder eines zweiten Schälrades in eine zweite Bearbeitungsstellung, wobei die Drehachse des Schälrades in einem von null verschiedenen Achskreuzwinkel zur Drehachse des Zahnrades steht, dass Schneidkanten der in die Zahnlücken des Zahnrades eingreifenden Schneidzähne des Schälrades mit einem positiven Spanwinkel an den rechten Zahnflanken der Zähne angreifen;
5. Bearbeiten jeweils nur der rechten Zahnflanken der Zähne des Zahnrades mit einer Wälzschälbewegung, bei der die Spanabtragsstelle vom Zahnkopf zum Zahnfuß wandert.

Die Erfindung betrifft darüber hinaus eine Vorrichtung zur Durchführung eines derartigen Verfahrens.

### Stand der Technik

Die EP 2 570 217 A1 beschreibt ein Wälzschälverfahren zum Fertigen von außenverzahnten Zahnrädern, bei denen in mehreren aufeinanderfolgenden Wälzschälbearbeitungsschritten das Wälzschälwerkzeug voneinander verschiedene Relativpositionen anfährt, wobei in einem ersten Wälzschälbearbeitungsschritt alle rechten Flanken fertig bearbeitet und jeweils die linken Flanken vorbearbeitet werden und in einem zweiten Wälzschälbearbeitungsschritt die linke Flanke fertig bearbeitet wird.

Die nicht vorveröffentlichte DE 10 2015 104 404 beschreibt ein Verfahren zum Bearbeiten verzahnter und gehärteter Werkräder, bei denen ein mit Aufmaß vorverzahntes und nach dem Vorverzahnen gehärtetes Werkrad durch Wälzschaben feinbearbeitet wird.

Eine ebenfalls nicht vorveröffentlichte DE 10 2015 104 500 beschreibt ein Verfahren zum Verzahnen eines Werkrades, bei dem in Schlichtschritten nacheinander jeweils nur die linke Zahnflanke und jeweils nur die rechte Zahnflanke jeweils mit einem einlaufenden Schnitt, bei dem eine Spanabtragsstelle vom Zahnkopf zum Zahnfuß wandert, bearbeitet werden.

Werkzeugmaschinen zum Bearbeiten von Zahnrädern mit einer Werkstückspindel, auf der das Zahnrad aufgespannt ist und mit einer oder mehreren Werkzeugspindeln, mit denen ein drehendes, Schneidkanten aufweisendes Werkzeug angetrieben wird, beschreiben die US 4,726,720 und US 4,865,497.

### Zusammenfassung der Erfindung

Ein im weichen Zustand verzahntes Zahnrad erfährt beim Einsatzhärten, bei dem auf den Zahnflanken eine Aufkohlung erzeugt wird, Härteverzüge. Bei außenverzahnten Werkrädern erfolgt die Feinbearbeitung, bei der die Härteverformung durch spanabhebende Maßnahmen wieder ausgeglichen werden, mit Honrädern. Eine Feinbearbeitung des vorverzahnten und gehärteten Werkrades durch Wälzschälen ist auch möglich, führt allerdings beim auslaufenden Schnitt, der in der Regel mit einer Spankante mit negativem Spanwinkel durchgeführt wird, zu Problemen bei der Flankenqualität. Innenverzahnte Werkräder lassen sich nur schwer mit einem Honrad feinbearbeiten.

Der Erfindung liegt daher die Aufgabe zugrunde, ein Verfahren zur Fertigung qualitativ hochwertiger Zahnflanken eines einsatzgehärteten Zahnrades anzugeben.

Gelöst wird die Aufgabe durch die in den Ansprüchen angegebene Erfindung. Die Unteransprüche stellen vorteilhafte Weiterbildungen der Erfindung dar.

Das erfindungsgemäße Verfahren wird derart durchgeführt, dass in einem ersten Verfahrens schritt ein vor verzahntes Werkrad gefertigt wird, bei dem es sich bevorzugt um ein innenverzahntes Zahnrad handelt. Es kann sich aber auch um ein außenverzahntes Zahnrad handeln. Die Zahnflanken des vorverzahnten Zahnrades sind mit einem Aufmaß versehen, welches in einem späteren Verfahrensschritt entfernt wird. Die Verzahnung an dem weichen Rohling wird bevorzugt mit einem Wälzschälverfahren gefertigt. Der vorverzahnte weiche Rohling wird danach einsatzgehärtet. Die Einhärttiefe geht dabei über das Aufmaß hinaus, sodass das Aufmaß etwa einem Drittel der Einhärttiefe entspricht. Nach dem Härten erfolgt mit dem erfindungsgemäßen Verfahren eine Hartbearbeitung mit einem Hartmetallwerkzeug in Form eines Schälrades. Hierzu wird das Schälrad, welches von einer drehantreibbaren Werkzeugspindel getragen wird in eine erste Bearbeitungsstelle gebracht, in der es in einem von null verschiedenen Achskreuzwinkel zur Drehachse einer Werkstückspindel steht, die das hart zu bearbeitende Zahnrad trägt. Die das Schälrad tragende Werkzeugspindel und die das Zahnrad tragende Werkstückspindel werden sodann in einer ersten Drehrichtung gedreht, sodass nur die linken Schneidkanten der mit Flankenspiel in die Zahnlücken des Zahnrades eingreifenden Schneidzähne des Schälrades an den linken Zahnflanken der Zähne des Zahnrades angreifen. Der Angriff erfolgt mit einem positiven Spanwinkel. Die Wälzschälbewegung erfolgt dabei derart, dass nur die linken Zahnflanken der Zähne des Zahnrades bearbeitet werden, wobei die Spanabtragsstelle vom Zahnkopf zum Zahnfuß wandert. In einem zweiten Hartbearbeitungsschritt werden sodann die rechten Zahnflanken bearbeitet, wobei hier die Wälzschälbewegung derart durchgeführt wird, dass nur mit rechten Schneidkanten der Schneidzähne des Schälrades gearbeitet wird und die Spanabtragsstelle vom Zahnkopf zum Zahnfuß wandert. Der zweite Hartbearbeitungsschritt kann mit demselben Schälrad oder mit einem anderen, einem zweiten Schälrad durchgeführt werden. Wird der zweite Hartbearbeitungsschritt mit demselben Schälrad durchgeführt, so wird das Schälrad in eine andere Bearbeitungsposition gebracht, bspw. wird der Achskreuzwinkel geändert. Die Verwendung desselben Schälrades bei den beiden Hartbearbeitungsschritten ist insbesondere dann vorgesehen, wenn ein schrägverzahntes Zahnrad gefertigt werden soll und hierzu ein geradverzahntes Schälrad verwendet wird. Der Betrag des Achskreuzwinkels kann dann in beiden Bearbeitungsschritten derselbe sein. Bei der Bearbeitung eines geradverzahnten Zahnrades werden bevorzugt zwei in Gegenrichtung schrägverzahnte Schälräder verwendet, die in voneinander verschiedenen, jedoch bevorzugt betragsgleichen Achskreuzwinkeln zur Werkradachse betrieben werden. Die voneinander verschiedenen Schälräder können von zwei verschiedenen Werkzeugspindeln drehangetrieben werden. Es ist aber auch möglich, dass die beiden Schälräder von einer gemeinsamen Werkzeugspindel drehangetrieben werden, bspw. können die Schälräder axial hintereinanderliegend auf derselben Werkzeugspindel angeordnet sein. In einer ersten Variante der Erfindung ist vorgesehen, dass die Hartfeinbearbeitung der linken und rechten Zahnflanken mit demselben Schälwerkzeug erfolgt. In einem ersten Bearbeitungsschritt wird das Schälrad derart relativ gegenüber dem Werkrad drehangetrieben, dass jeweils nur die linken Zahnflanken bearbeitet werden. Der Vorschub erfolgt hierbei in einer ersten Vorschubrichtung gegenüber dem Werkrad. Nach der Bearbeitung der linken Zahnflanken wird das Werkrad um 180 Grad bezogen auf die Drehachse des Werkrades gewendet. Mit demselben Schneidwerkzeug werden dann die rechten Zahnflanken bearbeitet. Bei diesem Verfahren ist es nicht erforderlich, dass sich die Drehrichtung der Werkzeugspindel ändert. Wird ein geradverzahntes Werkrad gefertigt, muss nicht einmal der Achskreuzwinkel geändert werden. Bei beiden Verfahrensschritten werden zwar voneinander verschiedene Zahnflanken des Werkrades bearbeitet. Die Bearbeitung erfolgt jedoch mit denselben Schneidzähnen des Schälrades. In beiden Bearbeitungsschritten wandern die Spanabtragsstellen vom Zahnkopf zum Zahnfuß. Die Vorschubrichtung in Bezug auf das Werkzeug ist in beiden Schritten dieselbe. Wegen des um 180 Grad gewendeten Werkrades erfolgt dort die Zahnflankenbearbeitung aber von der anderen Seite her, sodass sich die Vorschubrichtung in Bezug auf das Werkstück um 180 Grad geändert hat. Anstelle eines Wendens des Werkrades kann aber auch die Position des Werkzeuges gewechselt werden, sodass es beim zweiten Bearbeitungsschritt mit geänderter Vorschubrichtung das Werkrad bearbeitet. Anstelle eines einzigen Schälrades können aber auch zwei Schälräder, die insbesondere identisch ausgebildet sind, verwendet werden, wobei ein Schälrad von einer ersten Seite die Zahnflanken bearbeitet und das zweite Schälrad von einer zweiten Seite her die Zahnflanken bearbeitet. Bei der Variante, bei der das Werkrad um 180 Grad gedreht wird, wird das Werkrad mit einem Greifer aus dem Futter der Werkstückspindel genommen, um 180 Grad gedreht und anschließend wieder in das Futter eingesetzt. Bei dieser Verfahrensvariante werden die Drehrichtungen von Werkstückspindel und Werkzeugspindel nicht geändert. Bleibt hingegen das Werkrad in seiner Aufspannung und wechselt nur die Angriffsrichtung bzw. Vorschubrichtung des Schälrades oder wird ein zweites Schälrad verwendet, so ändert sich die Drehrichtung.

In einer zweiten Variante der Erfindung werden zwei voneinander verschiedene Schälräder verwendet. Werden zwei schrägverzahnte Schälräder verwendet, so ist bevorzugt der Schrägungswinkel betragsgleich, besitzt jedoch ein anderes Vorzeichen. Bei dieser Verfahrensvariante werden ebenfalls zunächst sämtliche linken Zahnflanken des Werkrades bearbeitet, wobei auch hier linke Schneidkanten des Schälrades in Angriff gebracht werden. Die rechten Zahnflanken werden nicht bearbeitet. In einem darauffolgenden zweiten Bearbeitungsschritt kommt das zweite Schälwerkzeug zum Einsatz, bei dem jetzt die rechten Schneidkanten an den rechten Zahnflanken der Zähne angreifen. Bei dieser Verfahrensvariante ist es nicht erforderlich, dass das Werkrad zwischen den beiden Bearbeitungsschritten um 180 Grad gewendet wird. Während bei der ersten Variante die Vorschubrichtung bezogen auf das Werkrad wechselt, bleibt bei dieser Verfahrensvariante die Vorschubrichtung auch bezogen auf das Werkrad dieselbe. Die zweite Variante der Erfindung betrifft die Feinbearbeitung eines innenverzahnten Werkrades, bei der von den einsatzgehärteten Zahnflanken nur ein geringer Materialabtrag vorgenommen wird. Bei dieser Variante wird das Werkrad zwischen den beiden Bearbeitungsschritten nicht umgespannt. Es wechselt aber die Drehrichtung.

Bei einer dritten Verfahrensvariante wechselt wie bei der ersten Verfahrensvariante die Vorschubrichtung in Bezug auf das Werkstück. Bei dieser Verfahrensvariante werden zwei Werkzeugspindeln verwendet, die jeweils ein Schälrad tragen. Beim ersten Verfahrensschritt, bei dem nur die linken Zahnflanken bearbeitet werden kommen linke Schneidzähne des ersten Schälrades in Angriff, wobei der Vorschub relativ zum Werkrad in eine erste Richtung erfolgt. Beim zweiten Bearbeitungsschritt kommt das zweite Schälrad zum Einsatz, dessen rechte Schneidkanten an den rechten Zahnflanken der Zähne angreifen. Der Vorschub erfolgt hier in Gegenrichtung. Die beiden Schälräder können von verschiedenen Seiten her in das Werkrad eintauchen. Es ist aber auch vorgesehen, dass die Werkzeugspindeln von derselben Seite her in das innenverzahnte Werkrad eintauchen und eine Zahnflankenbearbeitung gewissermaßen schiebend erfolgt und die andere Zahnflankenbearbeitung gewissermaßen ziehend erfolgt. Die beiden Schälräder können aber auch auf einer Werkzeugspindel angeordnet sein, nämlich bevorzugt axial hintereinander. Auch bei dieser Variante können die beiden Hartbearbeitungsschritte mit unterschiedlichen Vorschubrichtungen erfolgen. Die beiden Schälräder besitzen jeweils Schneidkanten, wobei die Schneidkanten der verschiedenen Schälräder entweder voneinander weg gerichtet sind, oder aufeinander zu gerichtet sind. Die Scheitellinie der Schneidzähne kann auf einer Zylindermantelfläche angeordnet sein. Die Scheitellinie der Schneidzähne kann aber auch auf Konusflächen verlaufen.

Eine Vorrichtung zur Durchführung des Verfahrens weist zwei Schälräder auf, die jeweils an ihren Stirnseiten Schneidkanten aufweisen, wobei die die Schneidkanten aufweisenden Stirnseiten entweder aufeinander zu gerichtet oder voneinander weg gerichtet sind. Die Erfindung betrifft darüber hinaus die Verwendung eines derartigen Kombiwerkzeuges zum Feinbearbeiten einsatzgehärteter Zahnräder.

### Kurze Beschreibung der Zeichnungen

Im Folgenden wird die Erfindung anhand von Ausführungsbeispielen näher erläutert. Es zeigen:
- Fig. 1: Eine erste Variante des erfindungsgemäßen Verfahrens, bei der ein erstes Schneidrad in einer Vorschubrichtung die Zahnflanken eines innenverzahnten Zahnrades bearbeitet,
- Fig. 2: den Schnitt gemäß der Linie II-II in Figur 1,
- Fig. 3: vergrößert den Ausschnitt III in Figur 2 zur Darstellung des Angriffs einer linken Schneidkante an einer linken Zahnflanke an einer Spanabtragsstelle,
- Fig. 4: eine Folgedarstellung zu Figur 3, wobei aufgrund der wälzenden Bearbeitung und einer Drehung des Werkrades in Drehrichtung die Spanabtragsstelle an der linken Zahnflanke vom Zahnkopf in Richtung auf den Zahnfuß gewandert ist,
- Fig. 5: einen Schnitt gemäß der Linie V-V zur Verdeutlichung des positiven Spanwinkels, des Freiwinkels und des Keilwinkels des Schneidzahnes,

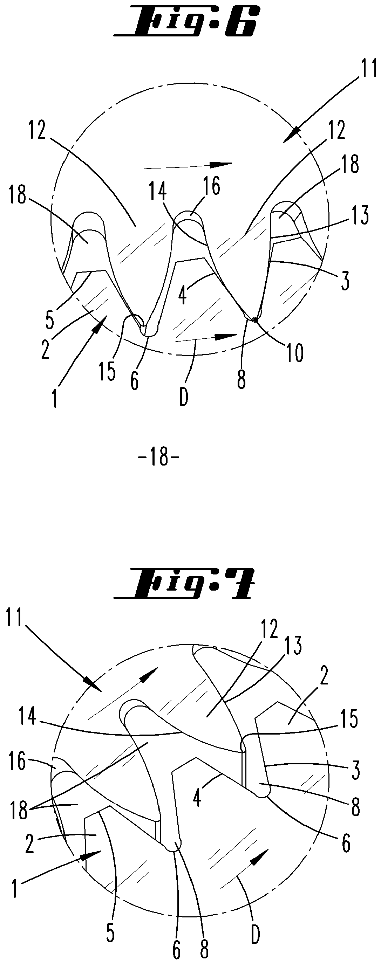

- Fig. 6: eine Folgedarstellung zu Figur 4, wobei die Spanabtragsstelle ihre Endeposition im Zahnfuß erreicht hat,
- Fig. 7: eine Folgedarstellung zu Figur 6 zur Verdeutlichung, dass der Schneidzahn bei der ersten Wälzschälbearbeitung ohne Angriff der rechten Schneidkante an der rechten Zahnflanke aus der Zahnlücke austaucht,
- Fig. 8: eine Darstellung gemäß Figur 1 jedoch beim zweiten Bearbeitungsschritt, bei dem ein zweites Schälrad mit einem zweiten Achskreuzwinkel in eine Bearbeitungsposition zum selben Werkrad gebracht ist,
- Fig. 9: eine Darstellung gemäß der Schnittlinie IX-IX in Figur 8,
- Fig. 10: vergrößert den Ausschnitt X in Figur 9 zur Verdeutlichung, dass eine Spanabtragsstelle beim zweiten Bearbeitungsschritt durch Angriff der rechten Schneidkante die rechte Zahnflanke des Werkrades bearbeitet. Es handelt sich gewissermaßen um eine klappsymmetrische Darstellung der in den Figuren 3, 4, 6 und 7 dargestellten Verhältnisse beim ersten Bearbeitungsschritt. Auch hier wandert die Spanabtragsstelle vom Zahnkopf des Zahnes zum Zahnfuß.
- Fig. 11: Eine Darstellung gemäß Figur 1 beim ersten Bearbeitungsschritt eines zweiten Ausführungsbeispiels der Erfindung,
- Fig. 12: eine Unteransicht zu Figur 11,
- Fig. 13: das zweite Ausführungsbeispiel beim Durchführen des zweiten Bearbeitungs schritts,
- Fig. 14: eine weitere Darstellung des zweiten Bearbeitungsschritts,
- Fig. 15: ein drittes Ausführungsbeispiel der Erfindung in einer Darstellung gemäß Figur 1 und
- Fig. 16: eine zweite Darstellung des dritten Ausführungsbeispiels.

### Beschreibung der Ausführungsformen

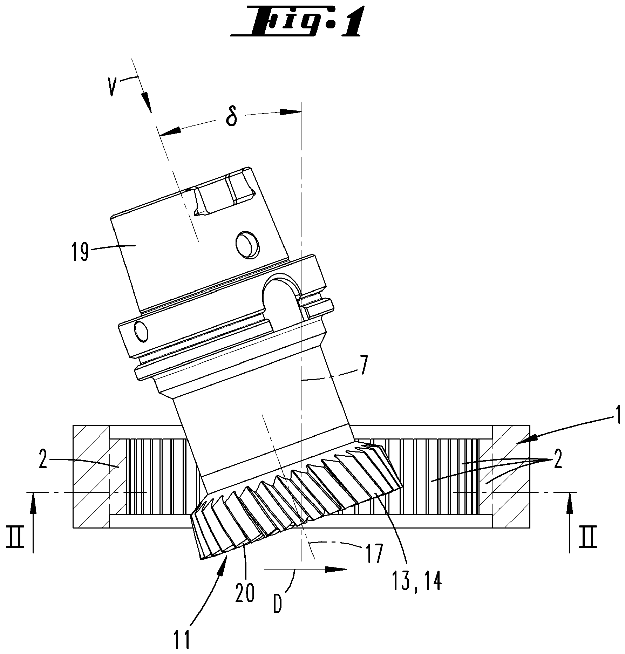

Die Figuren 1 bis 3 zeigen ein Werkrad 1, bei dem es sich um ein innenverzahntes Zahnrad handelt, welches nach einer Vorverzahnung mit einem Aufmaß durch Aufkohlen einsatzgehärtet worden ist. Die Einhärttiefe erstreckt sich dabei über das Aufmaß hinaus in die Zahnflanke der Zähne 2. Das Zahnrad 1 besitzt eine Geradverzahnung. Das Schneidrad 11 besitzt eine Schrägverzahnung mit linken Schneidkanten 13 und rechten Schneidkanten 14. Die Werkstückachse 7 steht in einem Achskreuzwinkel zur Werkzeugachse 17. Der Achskreuzwinkel δ beträgt etwa 20 Grad. Der Vorschub V erfolgt in Achsrichtung einer nicht dargestellten Werkzeugspindel, die das Schälrad 11 trägt. Hierzu ist ein Befestigungsschaft 19 in der Werkzeugspindel eingespannt. Die Drehung D von Werkrad 1 bzw. Werkzeug 11 erfolgt derart, dass eine Spanabtragsstelle 10 vom Zahnkopf 5 des Zahnes 2 des Werkrades 1 hin zum Zahnfuß wandert und nur die linke Schneidkante 13 des Schneidzahnes 12 des Schälrades 11 spanabhebend arbeitet. Mit einer derartigen kontinuierlich drehangetriebenen wälzschälenden Bearbeitung werden zunächst sämtliche linken Zahnflanken des Werkrades 1 bearbeitet.

Die rechten Zahnflanken 4 der Zähne 2 des Werkrades 1 können sodann in einem zweiten Bearbeitungsschritt bearbeitet werden, wozu das Werkrad 1 um 180 Grad gedreht wird. Dieselben linken Schneidkanten 13 der Schneidzähne 12 greifen dann an rechten Zahnflanken 4 desselben Zahnrades 1 an. Mit demselben Schälrad 11 werden dann analog zum ersten Bearbeitungsschritt die rechten Zahnflanken 4 der Zähne 2 des Werkrades wälzschäl bearbeitet.

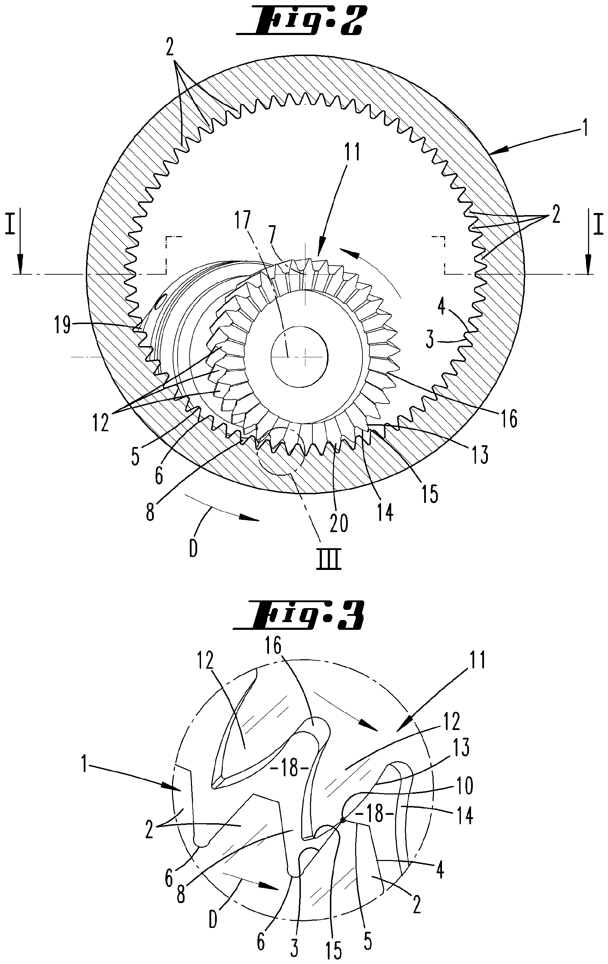

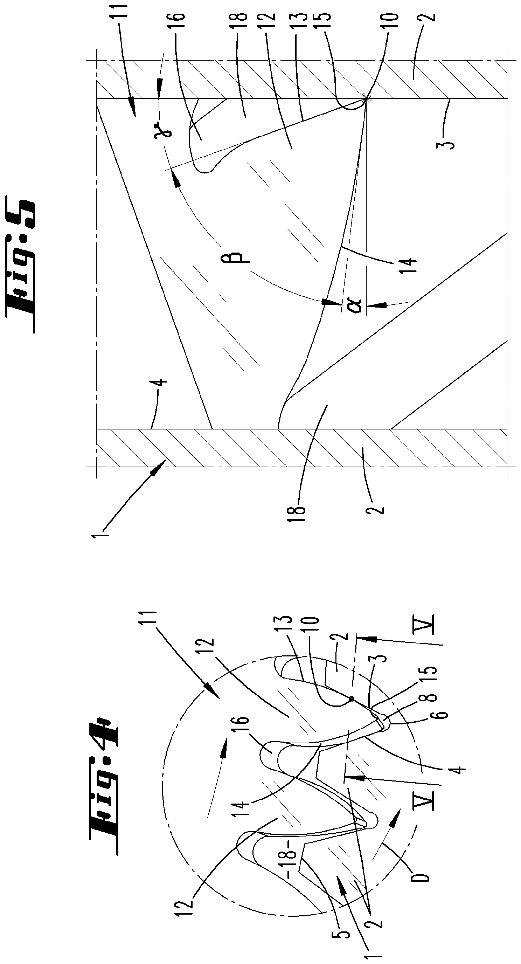

Wie die Figuren 3 bis 5 zeigen erfolgt in beiden Bearbeitungsschritten die Wälzschälbearbeitung im einlaufenden Schnitt, bei dem die Spanabtragsstelle 10 vom Zahnkopf 5 zum Zahnfuß wandert und der Schneidzahn 12 mit einem positiven Spanwinkel α an der jeweiligen Zahnflanke 3, 4 angreift. Bei dieser Verfahrensvariante wird das Werkrad in einem Spannfutter einer Werkstückspindel gehalten, die beim Verzahnen der linken Zahnflanken 3 in einer ersten Drehrichtung gedreht wird. Nach dem Bearbeiten der linken Zahnflanken 3 wird das Werkrad 1 aus dem Spannfutter herausgenommen und um 180 Grad gewendet wieder eingespannt. Bei der dann erfolgenden Bearbeitung der rechten Zahnflanken 4 wird die Werkstückspindel in derselben ersten Drehrichtung gedreht.

Zu einem kinematisch gleichwertigen Ergebnis führt eine Umpositionierung der Werkzeugspindel, sodass das Schälrad in entgegengesetzten Richtungen verlagert wird.

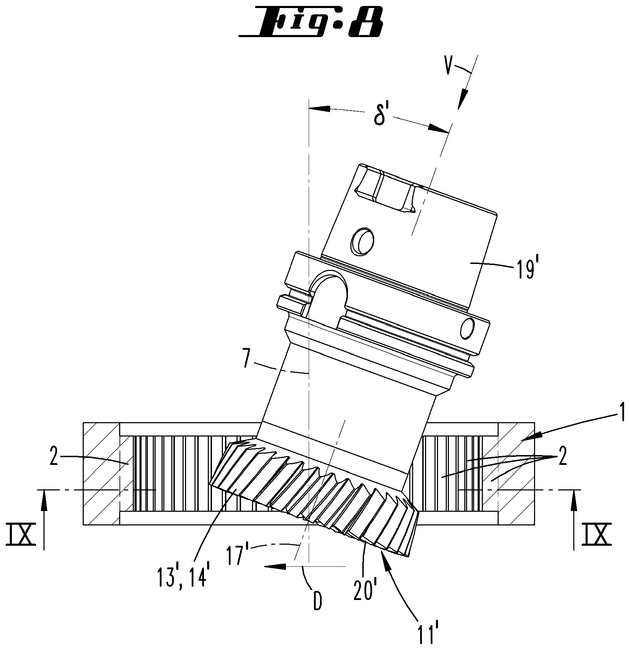

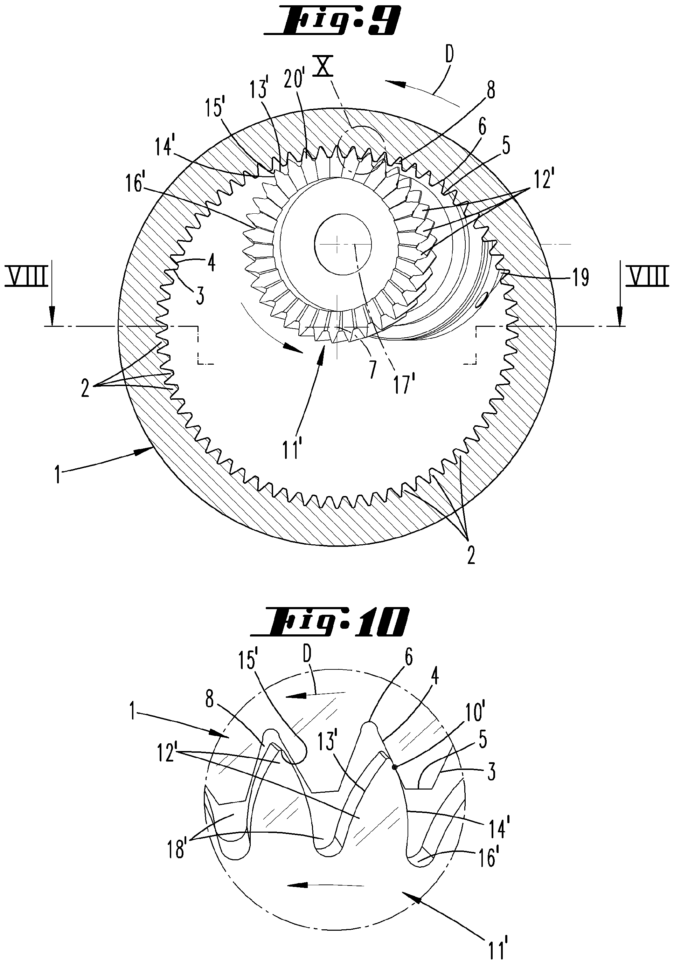

Die Figuren 8 bis 10 zeigen eine Variante, bei der anstelle desselben Schälrades 11 ein zweites Schälrad 11' verwendet wird, dessen Zahnschrägung spiegelverkehrt zur Zahnschrägung des ersten Schälrades 11 gestaltet ist. Bei dieser Variante braucht das Werkrad 1 nicht gedreht zu werden. Das schrägverzahnte zweite Schälrad 11 greift mit einem vorzeichengedrehten Achskreuzwinkel δ' am Werkrad 1 an, sodass wie in der Figur 10 gezeigt, die rechte Schneidkante 14' mit einer vom Zahnkopf 5 zum Zahnfuß 6 wandernden Spanabtragsstelle 10' die rechte Zahnflanke 4 des Zahnes des Werkrades 1 bearbeitet.

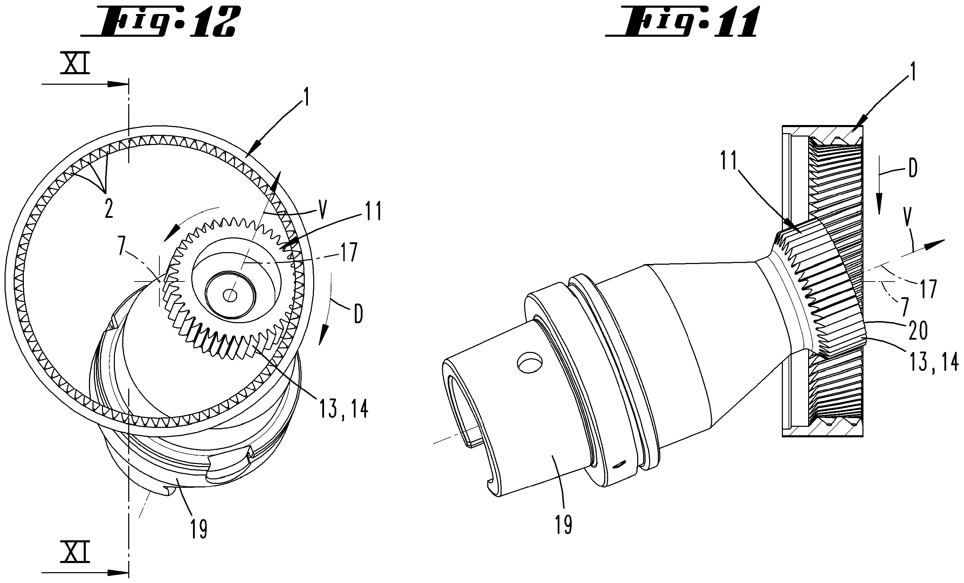

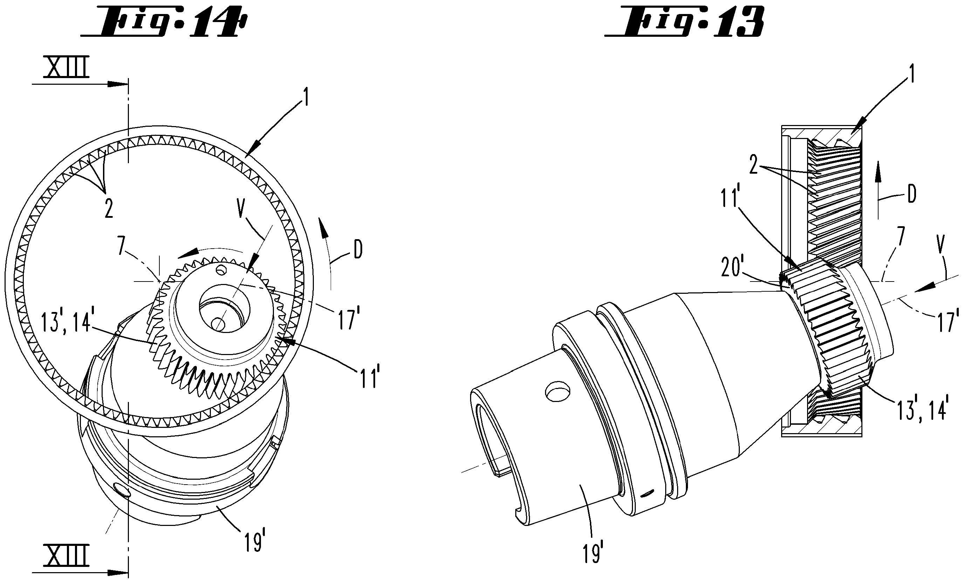

Die Figuren 12 bis 13 zeigen eine weitere Variante des erfindungsgemäßen Verfahrens, bei der zwei verschiedene, hier jedoch geradverzahnte Schneidräder 11,11' verwendet werden. Der Eingriff in das Werkrad 1 erfolgt hier von derselben Breitseite des Werkrades 1 her. Die Vorschubrichtung V ist in den beiden aufeinander folgenden Bearbeitungsschritten jedoch entgegen gerichtet. Hierzu weisen die beiden Schneidräder 11, 11' an voneinander verschiedenen Axialpositionen die Schneidkanten 13,14 auf. Während bei dem in den Figuren 11 und 12 dargestellten Schälrad 11 die Schneidkanten 13, 14 am freien Ende des Schneidrades 11 angeordnet sind, also an dem Ende des Schneidrades 11, welches von der nicht dargestellten Werkzeugspindel weg weist, weisen die Schneidkanten 13,14 des zweiten Schälrades 11' zur nicht dargestellten Werkzeugspindel hin. Der erste Bearbeitungsschritt mit dem in den Figuren 11 und 12 dargestellten Schneidrad 11 erfolgt somit gewissermaßen schiebend, während der zweite Bearbeitungsschritt entsprechend der Figuren 13,14 gewissermaßen ziehend erfolgt. Das Werkrad 1 wird in den beiden Bearbeitungsschritten jeweils in entgegengesetzten Drehrichtungen angetrieben.

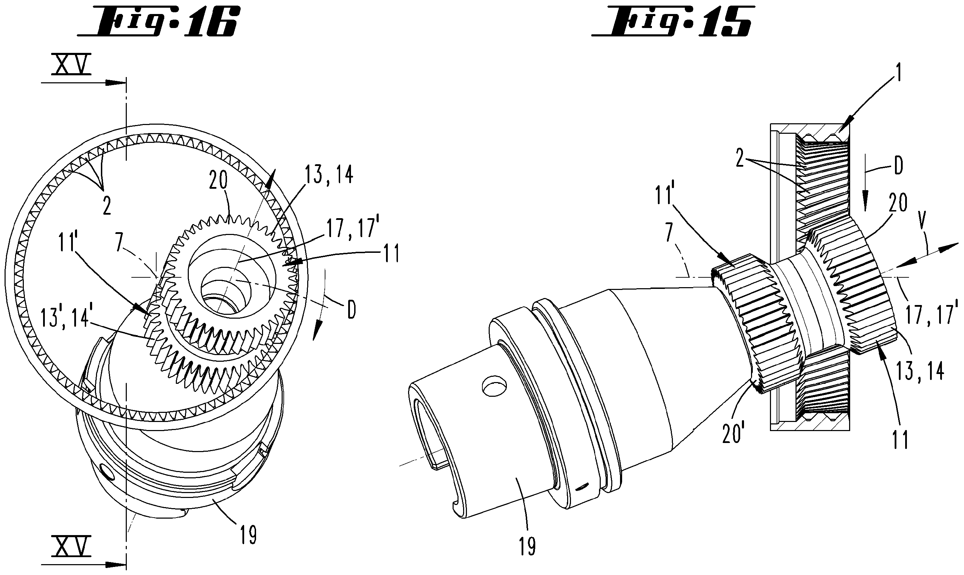

Die Figuren 15 und 16 zeigen ein weiteres Ausführungsbeispiel, dessen Kinematik derjenigen des in den Figuren 11 bis 14 dargestellten Ausführungsbeispiels entspricht. Die beiden Schälräder 11,11' werden hier allerdings nicht von getrennten Werkzeugspindeln angetrieben. Die beiden Schneidräder 11,11' sind in Achsrichtung hintereinander liegend auf demselben Befestigungsschaft 19 angeordnet. Der Vorschub erfolgt hier während des ersten Bearbeitungsschrittes, bei dem die vom Befestigungsabschnitt 19 weg weisenden Schneidkanten 13,14 in Eingriff treten in die eine Richtung und beim zweiten Bearbeitungsschritt, bei dem die zum Befestigungsschaft 19 hinweisenden Schneidkanten 13,14 verwendet werden, in einer entgegengerichteten Vorschubrichtung.

Bei den beschriebenen Ausführungsbeispielen wird die Werkzeugspindel zum Zwecke des Vorschubs in ihrer Achsrichtung verlagert. In nicht dargestellten Ausführungsbeispielen, die Alternativen darstellen zu den gezeigten Ausführungsbeispielen, wird anstelle der Werkzeugspindel die Werkstückspindel in ihrer Achsrichtung zum Zwecke des Vorschubs verlagert.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, nämlich:

Ein Verfahren, das dadurch gekennzeichnet ist, dass der Vorschub beim Bearbeiten der rechten Zahnflanken 4 um 180 Grad verschieden ist gegenüber dem Vorschub beim Bearbeiten der linken Zahnflanken 3;

Ein Verfahren, das dadurch gekennzeichnet ist, dass nach der Bearbeitung der linken Zahnflanken 3 und vor der Bearbeitung der rechten Zahnflanken 4 das Zahnrad 1 um 180 Grad gewendet wird und das Schälrad 11 bei der Bearbeitung der rechten Zahnflanken 4 in derselben Richtung dreht wie beim Bearbeiten der linken Zahnflanken 3;

Ein Verfahren, das dadurch gekennzeichnet ist, dass das Schälrad 11 bei der Bearbeitung der linken Zahnflanken 3 in einer ersten Richtung am Zahnrad 1 angreift und bei der Bearbeitung der rechten Zahnflanken 4 in einer zweiten Richtung, die um 180 Grad gegenüber der ersten Richtung verschieden ist, am Zahnrad 1 angreift;

Ein Verfahren, das dadurch gekennzeichnet ist, dass die Verzahnung eine Innenverzahnung ist und als Werkzeug ein Hartmetallschälrad 11, 11' verwendet wird;

Ein Verfahren, das dadurch gekennzeichnet ist, dass ein erstes Schälrad 11 zur Bearbeitung der linken Zahnflanken 3 und ein zweites Schälrad 11' zur Bearbeitung der rechten Zahnflanken 4 von einer gemeinsamen Werkzeugspindel drehangetrieben werden;

Ein Verfahren, das dadurch gekennzeichnet ist, dass ein erstes Schälrad 11 zur Bearbeitung der linken Zahnflanken 3 und eine zweites Schälrad 11' zur Bearbeitung der rechten Zahnflanken 4 von zwei voneinander verschiedenen Werkzeugspindeln drehangetrieben werden;

Ein Verfahren, das dadurch gekennzeichnet ist, dass die Verzahnung eine Schrägverzahnung ist und die beiden Bearbeitungsschritte mit demselben geradverzahnten Schneidrad 11' durchgeführt werden;

Ein Verfahren, das dadurch gekennzeichnet ist, dass die Verzahnung eine Geradverzahnung ist und bei den beiden Bearbeitungsschritten voneinander verschiedene Schälräder 11,11' verwendet werden, die mit betragsgleichen Achskreuzwinkeln δ, δ' an unterschiedlichen Umfangspositionen des Zahnrades 1 angreifen;

Ein Verfahren, das dadurch gekennzeichnet ist, dass zwei Schälräder 11, 11' mit voneinander weg weisenden Schneidkanten 13,14 verwendet werden, wobei die beiden Schneidräder 11,11' jeweils von separaten Werkzeugspindeln angetrieben werden;

Ein Verfahren, das dadurch gekennzeichnet ist, dass zwei Schälräder 11, 11' in voneinander weg weisenden Schneidkanten 13,14 verwendet werden, wobei die beiden Schälräder 11, 11' von einem gemeinsamen Befestigungsschaft 19 getragen sind und von derselben Werkzeugspindel drehangetrieben werden;

Eine Vorrichtung, die gekennzeichnet ist durch zwei auf einer gemeinsamen Welle angeordnete Schälräder 11,11' deren Schneidkanten 13,14 voneinander weg weisen oder aufeinander zu weisen.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

### Liste der Bezugszeichen

- 1: Zahnrad
- 2: Zahn
- 3: erste Zahnflanke
- 4: zweite Zahnflanke
- 5: Zahnkopf
- 6: Zahnfuß
- 7: Werkstück-Drehachse
- 8: Zahnlücke
- 9: -----------
- 10: Schneidflanken-Angriffspunkt
- 11: Schneidrad
- 12: Schneidzahn
- 13: erste Schneidkante
- 14: zweite Schneidkante
- 15: Schneidkantenkopf
- 16: Schneidkantenfuß
- 17: Werkzeugdrehachse
- 18: Schneidzahnlücke
- 19: Befestigungsschaft
- 20: Stirnseite

- α: Spanwinkel
- δ, δ': Achskreuzwinkel

## Patentansprüche

1. Verfahren zur Fertigung eines einsatzgehärteten Zahnrades (1) mit folgenden Schritten:
- Bereitstellen eines mit einem Aufmaß vorverzahnten, nach dem Vorverzahnen in eine über das Aufmaß gehende Tiefe der linken und rechten Zahnflanken (3, 4) der Zähne (2) einsatzgehärteten, Zahnrades (1);
- Zustellen eines Schälrades (11) in eine erste Bearbeitungsstellung, wobei die Drehachse (17) des Schälrades (11,11') in einem von null verschiedenen Achskreuzwinkel (δ) zur Drehachse (7) des Zahnrades (1) steht, sodass Schneidkanten (13) der in die Zahnlücken des Zahnrades (1) eingreifenden Schneidzähne (12) des Schälrades (11, 11') mit einem positivem Spanwinkel (α) an den linken Zahnflanken (3) der Zähne (2) angreifen;
- Bearbeiten jeweils nur der linken Zahnflanken (3) der Zähne (2) des Zahnrades (1) mit einer Wälzschälbewegung, bei der die Spanabtragsstelle (10) vom Zahnkopf (5) zum Zahnfuß (6) wandert;
- Zustellen desselben Schälrades (11, 11') oder eines zweiten Schälrades (11') in eine zweite Bearbeitungsstellung, wobei die Drehachse (17') des Schälrades (1) in einem von null verschiedenen Achskreuzwinkel (δ') zur Drehachse des Zahnrades (1) steht, dass Schneidkanten (14) der in die Zahnlücken des Zahnrades (1) eingreifenden Schneidzähne (12) des Schälrades (11) mit einem positiven Spanwinkel (α) an den rechten Zahnflanken (4) der Zähne (2) angreifen;
- Bearbeiten jeweils nur der rechten Zahnflanken (4) der Zähne (2) des Zahnrades (1) mit einer Wälzschälbewegung, bei der die Spanabtragsstelle (10) vom Zahnkopf (5) zum Zahnfuß (6) wandert,
**dadurch gekennzeichnet, dass** der Vorschub beim Bearbeiten der rechten Zahnflanken (4) um 180 Grad verschieden ist gegenüber dem Vorschub beim Bearbeiten der linken Zahnflanken (3).

2. Verfahren nach Anspruch 1, **dadurch gekennzeichnet, dass** nach der Bearbeitung der linken Zahnflanken (3) und vor der Bearbeitung der rechten Zahnflanken (4) das Zahnrad (1) um 180 Grad gewendet wird und das Schälrad (11) bei der Bearbeitung der rechten Zahnflanken (4) in derselben Richtung dreht wie beim Bearbeiten der linken Zahnflanken (3).

3. Verfahren nach Anspruch 1, **dadurch gekennzeichnet, dass** das Schälrad (11) bei der Bearbeitung der linken Zahnflanken (3) in einer ersten Richtung am Zahnrad (1) angreift und bei der Bearbeitung der rechten Zahnflanken (4) in einer zweiten Richtung, die um 180 Grad gegenüber der ersten Richtung verschieden ist, am Zahnrad (1) angreift.

4. Verfahren nach dem Gattungsbegriff des Anspruchs 1, **dadurch gekennzeichnet, dass** die Verzahnung eine Innenverzahnung ist und als Werkzeug ein Hartmetallschälrad (11, 11') verwendet wird.

5. Verfahren nach einem der vorhergehenden Ansprüche, **dadurch gekennzeichnet, dass** ein erstes Schälrad (11) zur Bearbeitung der linken Zahnflanken (3) und ein zweites Schälrad (11') zur Bearbeitung der rechten Zahnflanken (4) von einer gemeinsamen Werkzeugspindel drehangetrieben werden.

6. Verfahren nach einem der vorhergehenden Ansprüche, **dadurch gekennzeichnet, dass** ein erstes Schälrad (11) zur Bearbeitung der linken Zahnflanken (3) und ein zweites Schälrad (11') zur Bearbeitung der rechten Zahnflanken (4) von zwei voneinander verschiedenen Werkzeugspindeln drehangetrieben werden.

7. Verfahren nach einem der vorhergehenden Ansprüche, **dadurch gekennzeichnet, dass** die Verzahnung eine Schrägverzahnung ist und die beiden Bearbeitungsschritte mit demselben geradverzahnten Schneidrad (11') durchgeführt werden.

8. Verfahren nach einem der vorhergehenden Ansprüche, **dadurch gekennzeichnet, dass** die Verzahnung eine Geradverzahnung ist und bei den beiden Bearbeitungsschritten voneinander verschiedene Schälräder (11,11') verwendet werden, die mit betragsgleichen Achskreuzwinkeln (δ, δ') an unterschiedlichen Umfangspositionen des Zahnrades (1) angreifen.

9. Verfahren nach einem der vorhergehenden Ansprüche, **dadurch gekennzeichnet, dass** zwei Schälräder (11, 11') mit voneinander weg weisenden Schneidkanten (13,14) verwendet werden, wobei die beiden Schälräder (11, 11') jeweils von separaten Werkzeugspindeln angetrieben werden.

10. Verfahren nach einem der vorhergehenden Ansprüche, **dadurch gekennzeichnet, dass** zwei Schälräder (11, 11') in voneinander weg weisenden Schneidkanten (13,14) verwendet werden, wobei die beiden Schälräder (11,11') von einem gemeinsamen Befestigungsschaft (19) getragen sind und von derselben Werkzeugspindel drehangetrieben werden.

11. Vorrichtung zur Durchführung eines Verfahrens gemäß einem der vorhergehenden Ansprüche, **gekennzeichnet durch** zwei auf einer gemeinsamen Welle angeordnete Schälräder (11,11') deren Schneidkanten (13, 14) voneinander weg weisen oder aufeinander zu weisen.

12. Verfahren, **gekennzeichnet durch** eines oder mehrere der kennzeichnenden Merkmale eines der vorhergehenden Ansprüche.
